# EUROPEAN PATENT APPLICATION

(11) **EP 1 065 618 A2**
(43) Date of publication of application: **03.01.2001**
(21) Application number: 99306860.0
(22) Date of filing: 27.08.1999
(51) Int. Cl.: G06F 17/60

(54) **Workflow system with business process definition**

(30) Priority: 25.06.1999 JP 18056399
(71) Applicant: Hitachi, Ltd., Chiyoda-ku, Tokyo 101 (JP); Hitachi Software Engineering Co., Ltd., Yokohama-Shi Kanagawa-Ken 231-0015 (JP)
(72) Inventor: Yokoyama, Takayuki, Yokohama-shi, Kanagawa-ken (JP); Koyama, Yoshinao, Sakae-ku, Yokohama-shi Kanagawa-ken (JP); Ohba, Michiko, Kanagawa-ken (JP); Tamaki, Masato, Kanagawa-ken (JP)
(74) Representative: Calderbank, Thomas Roger

(57) **Abstract**

A workflow server for making a work item created or processed by a client terminal transition in accordance with a business process preliminarily defined for each business, comprising, besides a workflow database, a file for storing a data set as a component of each business process defined for each business, and a component managing function of outputting a list of names of components of each data set stored in the file onto the screen of a client's terminal, reading a corresponding data set having a specific component designated by the user from the file, and transmitting the read data set to the client terminal.

## Description

The present invention relates to a workflow system and, more particularly, to a workflow server with a business process definition tool for defining a business process and a client terminal.

A workflow system is a computer network system developed to effectively process an office work in which a plurality of people are involved in time series. By preliminarily defining the flow of each work item generating in the form of an electronic document in an office work, the work item processed by a client terminal is automatically transferred to the next person in charge in accordance with the workflow (hereinbelow, called a business process).

The workflow system comprises, for example, a plurality of client terminals which are mutually connected via a communication network represented by an LAN and a workflow server which communicates with the client terminals via the communication network. The workflow server has a process management table in which each business process is defined in advance and either a new work item (electronic document) drafted by each client terminal or a work item transferred from another user and additionally processed by a client terminal is automatically transited to the next step along the business process.

The business process is made up of a plurality of steps called nodes each of which defines a processing unit of the work called an activity. Accompanying the activity, for example, the person in charge of the process (hereinbelow, described as "participant") and an application program (hereinbelow, described as "application") necessary to execute the process are defined. Nodes constructing the business process include, besides the activity, start and end nodes of a process and control nodes indicative of a diverging point and a junction point of a work item.

Definition of each business process is attained by connecting a plurality of node symbols arranged between the start node and the end node by arrow signs indicative of the flow of the work item on the display screen of the server or a client terminal and defining the participants and the application of each activity node.

The function of a workflow system which is commercially available at present is introduced as "Effectiveness of workflow management system" in the "Operations Research" magazine, October issue, 1996, pp. 559 to 568. A conventional product such as the workflow system "Staffware" of Unisys Corp. having the graphical workflow definer function of selecting an icon from a tool box, dragging and dropping the icon, and entering data for necessary items is also known.

In the conventional workflow systems, when a new business process definition is required, either a method of newly defining all of nodes constructing the business process or another method of copying an entire existing business process definition, changing a part of it, giving a new process name to the resulted business process, and registering it is employed. The conventional methods, however, have a problem that it takes much time to create a new business process. At the occasion of entirely or partially changing the definition of a relatively common node included in existing business process definitions, conventionally, it is necessary to check whether the definition changed node is used or not and, if yes, the definition has to be changed in each of the other business process definitions created by copying the business process definitions. Consequently, a problem that some of them are failed to be changed may occur.

It is an object of the invention to provide a workflow server and a client terminal capable of easily defining a new business process.

It is another object of the invention to provide a workflow server and a client terminal capable of easily changing the definition of a component of an existing business process.

It is further another object of the invention to provide a user interface for a workflow system capable of easily defining a new business process and defining a component of a business process.

In order to achieve the objects, according to a workflow server of the invention, a part or entire process in an existing business process definition is stored as component parts into a file and, at the occasion of creating a new business process at a client terminal, the user can use the component parts. More specifically, a workflow server of the invention is characterized by comprising: filing means for storing a data set as components of each business process defined for each business; and component managing means for providing a list of component names of each data set stored in the filing means as business process definition tool information to one of the client terminals, reading a corresponding data set including a specific component designated by the client terminal from the filing means, and transmitting the read data set to the client terminal.

According to a preferable embodiment of the invention, the filing means has, for example, a plurality of tables for storing the data set by the kind of component, and the component managing means classifies the lists of the component names into tables and provides the resultant tables to the client terminal. The component managing means additionally registers a data set having a new component name created by the client terminal into the filing means.

According to another aspect, a workflow server of the invention is characterized by comprising: first storing means for storing definition data on a business process made up of a plurality of nodes; second storing means for storing a data set in which a component of the business process stored in the first storing means is defined; workflow managing means for making a work item created or processed by each client terminal transit in accordance with the business process definition data corresponding to the work item stored in the first storing means; and component managing means for providing a list of component names of each data set stored in the second storing means in response to a request from the client terminal, and transmitting a data set corresponding to a component name to the client terminal in response to a data transfer request in which the component name is designated from the client terminal.

According to another feature of the invention, in the workflow server, definition data on each business process stored in the first storing means defines the connecting relation of nodes constructing each business process, at least a part of the data set stored in the second storing means has a component name corresponding to a node name used in the business process definition data, and the workflow managing means controls each of the work items on the basis of the business process definition data stored in the first storing means and the data set stored in the second storing means which is linked from the node name in the business process definition data.

The component managing means includes a function of additionally registering definition data on a business process having a new process name created by the client terminal into the first storing means and means for additionally registering a data set having a new component name created by the client terminal into the second storing means.

According to a preferred embodiment of the invention, the workflow server has retrieving means for retrieving a business process having a specific component from business processes stored in the first storing means when a request for retrieving the specific component from business processes is received from the client terminal, and replying the name of the relevant business process to the client terminal.

According to the invention, there is provided a client terminal connected to a workflow server which makes a work item transit in accordance with a business process preliminarily defined for each business, comprising: a display screen;
input means for operating a cursor position on the display screen; and control means for creating a window for business process definition and a command menu on the display screen, communicating with the workflow server and changing a display on the window in accordance with a user operation, the command menu having a plurality of buttons according to kinds of components of a business process, and the window having a first region for displaying a list of component names of a business process and a second region used to define a new business process or a new component, wherein the control means is provided with a function of displaying a registered list of the names of components of a business process from the workflow server, in the first region at the time of creating the window, thereby enabling the user of the client terminal to define the business process by using the command menu and the list of the component names.

According to another feature of the client terminal of the invention, the control means is characterized by comprising: a function of creating a symbol of a component corresponding to a selected button or a dialogue for definition corresponding to the component in response to a user operation of selecting a button in the command menu, in the second region; and a function of selecting a specific component from the list of component names displayed in the first region and creating a symbol indicative of the specific component or a dialogue for definition corresponding to the specific component in the second region in response to a user operation of copying the specific component into the second region.

According to another feature of the client terminal of the invention, the control means includes a function of making a request to register component definition data entered by the user in the dialogue for definition into the workflow server.

According to an embodiment of the invention, the command menu has a button for creating a dialogue for defining a business process name, and the control means has a function of creating the dialogue for defining a business process name in the second region in response to a user operation of selecting the button and making a request to register definition data on a new business process defined in the second region under a process name entered in the dialogue into the workflow server. Each of the dialogues for definition has, for example, an icon for instructing registration of definition data, and the control means makes a request to register a data set defined in the dialogue for definition into the workflow server in response to the user's selection of the icon.

In the drawings

Fig. 1 is a diagram showing the configuration of a workflow system of the invention.

Fig. 2 is a diagram showing a conventional method of developing a business process definition.

Fig. 3 is a diagram showing a method of developing a business process definition according to the invention.

Fig. 4 is a diagram showing control nodes used for the business process definition.

Fig. 5 is a diagram showing an example of a business process and a sub-process.

Fig. 6 is a diagram demonstrating the configuration of a business process definition table formed in a workflow database 30.

Fig. 7A is a diagram showing the configuration of an activity table formed in a repository file 10.

Fig. 7B is a diagram showing the configuration of a participant table formed in the repository file 10.

Fig. 7C is a diagram showing the configuration of an application table formed in the repository file 10.

Fig. 7D is a diagram showing the configuration of a control node table formed in the repository file 10.

Fig. 7E is a diagram showing the configuration of a sub-process table formed in the repository file 10.

Fig. 8 is a diagram for explaining a business process definition tool window and an activity definition dialogue D1 created on the screen of a client terminal.

Figs. 9A and 9B are diagrams for explaining a "shallow copy" and a "deep copy" of a component, respectively.

Figs. 10A and 10B are diagrams showing formats of a participant definition dialogue D2 and an application definition dialogue D3, respectively.

Fig. 11 is a diagram for explaining a method of designating a sub-process and a format of a sub-process definition dialogue D4.

Fig. 12 is a flowchart showing the function of a component display routine 210 as a part of a reference routine 21.

Fig. 13 is a flowchart illustrating the function of an activity registering routine 220 as a part of a registering routine 22.

Fig. 14 is a flowchart showing the function of a participant registering routine 230 as a part of the registering routine 22.

Fig. 15 is a flowchart showing the function of an application registering routine 240 as a part of the registering routine 22.

Fig. 16 is a flowchart showing the function of a sub-process registering routine 250 as a part of the registering routine 22.

Fig. 17 is a diagram illustrating an example of a display screen W1 as a result of retrieving business process definitions related to a designated component.

Fig. 18 is a flowchart showing the function of a business process name retrieval routine 23.

Fig. 19 is a diagram representing an example (business process of request for travelling expenses) of an existing business process.

Fig. 20 is a diagram showing an example of a business process (business process of request for holiday) to be newly created.

Fig 21 is a diagram showing a state of the repository file 10 at the time of creating a new business process.

Figs. 22A and 22B are diagrams illustrating application definition dialogues D3-13 and D3-14 each of which is created to register an application program to be used for a new business process.

Fig. 23 is a diagram showing an activity definition dialogue D1-13 created to define and register one of activities constructing a new business process.

Fig. 24 is a diagram illustrating the state of the updated repository file 10.

Fig. 25 is a diagram for explaining the user operation in a business process definition tool window.

Fig. 26 is a diagram for explaining the contents of the original definition of a copied activity and the contents of an updated definition.

Fig. 27 is a diagram showing the state of the repository file 10 at the time of completion of a new business process.

Fig. 28 is a diagram showing a process name definition dialogue D5 created to register the new business process into a workflow database.

### DESCRIPTION OF THE PREFERRED EMBODIMENTS

Embodiments of the invention will be described hereinbelow with reference to the drawings.

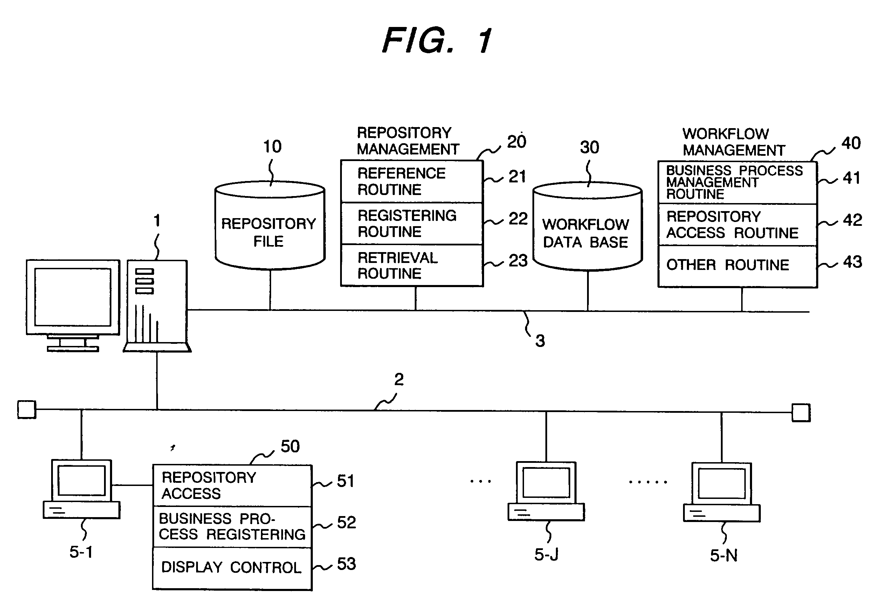

Fig. 1 shows the configuration of a workflow system according to the invention.

The workflow system is comprised of a workflow server 1 and a plurality of client terminals 5 (5-1 to 5-N) connected to the server 1 via a LAN 2. The workflow server 1 comprises a file (hereinbelow, called a repository file) 10 for storing component information about a business process, a program memory 20 for repository management, a workflow database 30 for storing work item data processed by the workflow system, a business process definition table (process management table), and other workflow data, a program memory 40 for workflow management, and a bus 3 connecting the components.

The program memory 20 for repository management includes a reference routine 21 for referring to the component information stored in the repository file 10, a registering routine 22 for updating the component information stored in the repository file 10, and a retrieval routine 23 for retrieving a business process to which a specific activity is related when the user designates a specific component, for example, the specific activity.

The program memory 40 for workflow management includes a business process management (workflow control) routine 41 for making a work item move or transit in accordance with a business process corresponding to the work item and a repository access routine 42 for making an inquiry to the program for repository management regarding the component information such as the activity or sub-process defined in each business process.

Each of the client terminals 5 has a mouse for the drag & drop operation of the cursor on its display screen. Among the client terminals, at least one terminal 5-1 used by a person in charge of developing the business process has a repository access routine 51 for accessing the component information stored in the repository file 10, a business process registering routine 52 for registering business process definition information newly developed into the workflow database 30, and a display control routine 53 for displaying the business process definition information and the component information read from the repository file onto the terminal screen. The repository access routine 51 has the function of calling the reference routine 21 for repository management and the registering routine 22 in a manner similar to the repository access routine 42 prepared in the workflow management memory.

The invention is characterized in that the component information such as the activity as an element of the business process and a sub-process which will be described hereinlater is stored in the repository file 10 and, at the occasion of defining a new business process, the existing component information stored in the repository file 10 can be re-used.

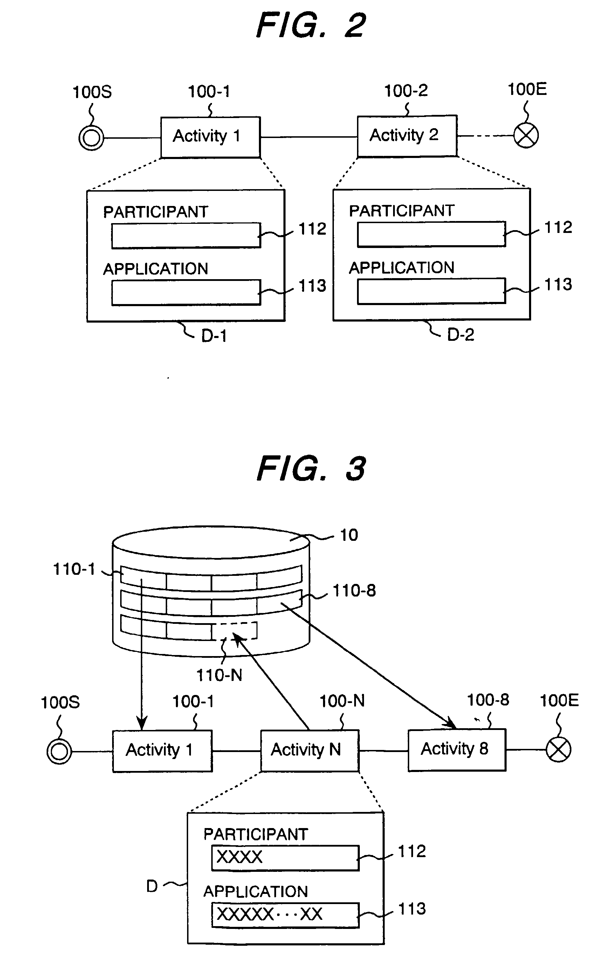

As for a conventional business process definition, for example, as shown in Fig. 2, a top-down development method of defining activities 100 (100-1, 100-2, ...) between a start node 100S and an end node 100E on a terminal screen and defining attribute information such as a participant 112 and an applicant 113 with respect to each activity 100 on a dialog screen D is used.

According to the invention, for example, like the activities 100-1 and 100-8 shown in Fig. 3, among the existing component information stored in the repository file 10, a node element applicable to the new business process is called from the repository file 10. With respect to only a new node element 100-N which is not stored in the repository file, attribute information such as the participant 112 and the applicant 113 is defined on the dialogue screen D. By combining the node elements, a new business process is defined. In the invention, the new node element 100-N may be obtained by changing a part of existing component information copied from the repository file 10. Each of the new node elements is labeled with a new node identification name and additionally registered in the repository file 10.

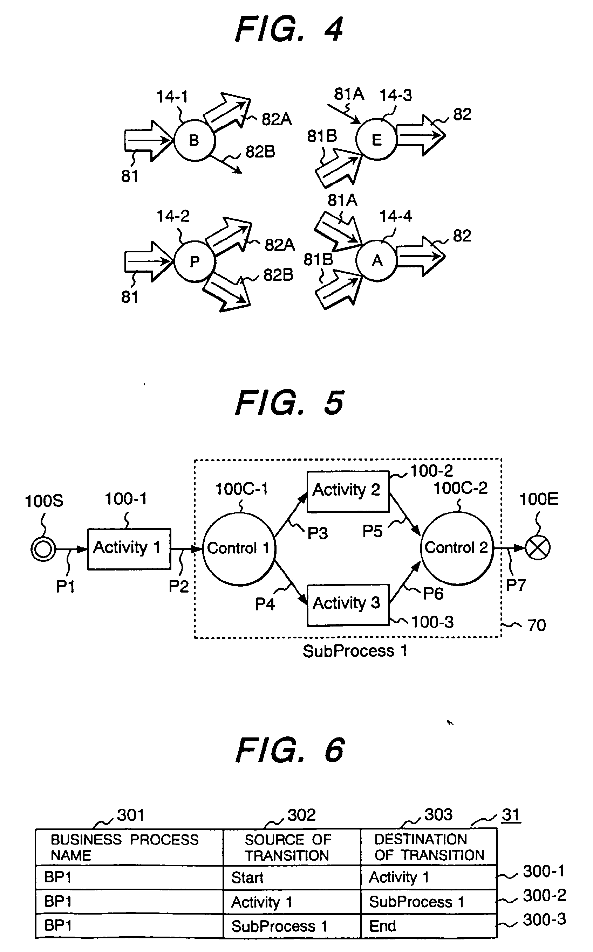

Fig. 4 shows flow control nodes used for the business process definition.

In the diagram, reference numeral 14-1 denotes a branch node for selectively transferring a work item sent from an input route 81 to an output route 82A which satisfies preliminarily defined conditions at a diverging point having a plurality of output routes 82A, 82B, ...; 14-2 denotes a parallel work node for copying a work item sent from the input route 81 and transferring the copies to the plurality of routes so as to execute a business process in parallel at a diverging point having a plurality of output routes 82A, 82B, ...; 14-3 indicates a first arrival node or exclusive OR join node for transferring work items to the output route 82 in accordance with the order of first arrival from any of input routes at a junction point of the plurality of input routes 81A, 81B, ...; and 14-4 denotes a waiting node or AND join node for transferring the work items to the output route 82 at the time point when all of the input routes have received work items at a junction point of the plurality of input routes 81A, 81B, ....

Fig. 5 shows an example of the business process and the sub-process.

The business process shown as an example comprises "activityl" 100-1, branch node "controll" 100C-1, "activity2" 100-2, "activity3" 100-3, and exclusive OR join node "Control2" 100C-2 defined between the start node 100S and the end node 100E. The node elements are associated by arrows P1 to P7.

The sub-process is a part of the business process and is, for example as shown in a broken line frame 70, a part comprising a plurality of node elements (the activities 100-2 and 100-3 and the control nodes 100C-1 and 100C-2) which are associated by the arrows (P3 to P6). When the part in the broken line frame 70 is defined as a sub-process name "SubProcessl", the business process can be defined as a process comprising the start node 100S, "Activityl" 100-1, "SubProcessl" 70, and the end node 100E.

Fig. 6 shows the configuration of a business process definition table 31 created in the workflow database 30.

The business process definition table 31 includes business process names 301 and a plurality of entries 300 (300-1, 300-2, ...) each of which is constructed by a pair of source of transition 302 and destination of transition 303.

The entries 300-1 to 300-3 shown as an example correspond to the definition data on the business process in Fig. 5. The entry 300-1 represents the relation between the start node (node name "Start") 100S and "Activityl" 100-1, the entry 300-2 represents the relation between "Activityl" 100-1 and "SubProcess1" 70, and the entry 300-3 indicates the relation between "SubProcessl" 70 and the end node (node name "End") 100E. Each of entries belonging to the same business process is labeled with the same business process name 301 ("BP1" in the case). Each business process is made up of a plurality of entries having the same process name in the business process definition table 31.

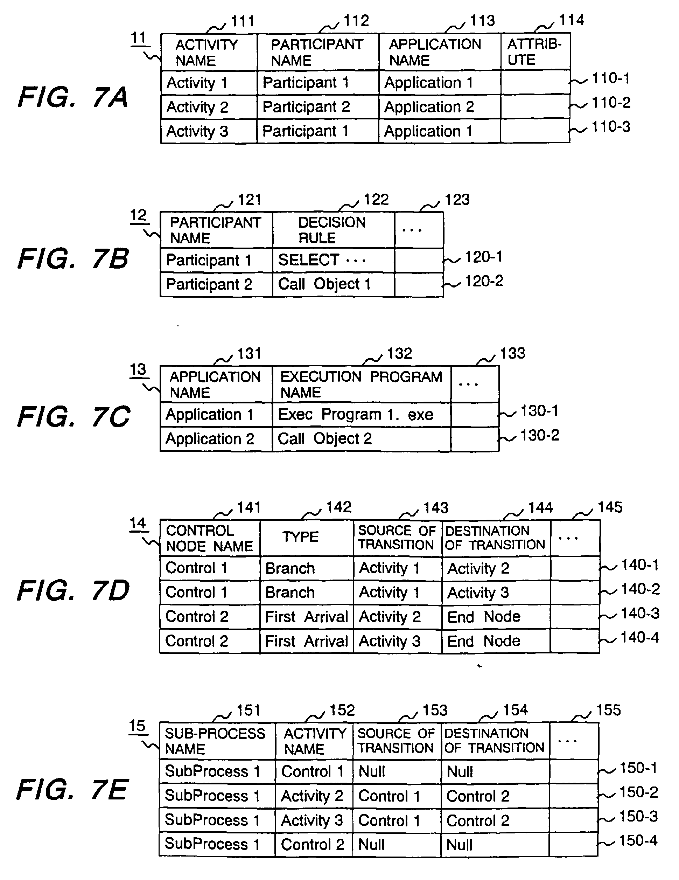

Figs. 7A to 7E show an example of a storing format of the component information in the repository file 10.

In the repository file 10, an activity table 11, a participant table 12, an application table 13, a control node table 14, and a sub-process table 15 are formed in accordance with the kind of component information.

The activity table 11 has a plurality of entries 110 (110-1, 110-2, ...) each consisting of activity name 111, participant name 112, applicant name 113, and other attribute information 114. The participant name 112 and the application name 113 serves as access keys to the participant table 12 and the application table 13, respectively. As the other attribute information 114, for example, information such as the creator's name and the date of creation of each activity is set.

The participant table 12 defines entries 120 (120-1, 120-2, ...) for specifying the person in charge of processing each activity defined in the activity table 11. In the example shown here, each entry 120 consists of participant name 121, decision rule 122, and the other item 123. In the decision rule 122, an SQL statement for specifying the person in charge of the process, name of a distributed object to be executed to determine the person in charge of the process, and the like are set.

The application table 13 includes a plurality of entries 130 (130-1, 130-2, ...) each consisting of application name 131, execution program name 132 indicative of information (such as full path of the program or name of the distributed object) to call up the program to be executed and the other item 133.

The control node table 14 includes a plurality of entries 140 (140-1, 140-2, ...) each consisting of control node name 141, type 142 of the control node, a pair of source 143 of transition and destination 144 of transition, and the other item 145. As shown in Fig. 4, the control node is a diverging point of one input path to a plurality of output paths or a junction point of a plurality of input paths to one output path. In order to define the relation between all of sources and destinations of one control node, for example, a plurality of entries having the same control node name 141 such as the entries 140-1 and 140-2 for "Control 1", and entries 140-3 and 140-4 for "Control 2" are necessary.

The sub-process table 15 includes a plurality of entries 150 (150-1, 150-2, ...) each consisting of sub-process name 151, activity name 152, source 153 of transition, destination 154 of transition, and the other item 155. Entries belonging to the same sub-process are labeled with the same sub-process name 151.

The entries 150-1 to 150-4 shown in Fig. 7E correspond to the sub-process "SubProcess1" shown in Fig. 5. The entries 150-1 to 150-4 define the relation between the source of transition and the destination of transition of the control node 100C-1, activity node 100-2, activity node 100-3, and control node 100C-2, respectively.

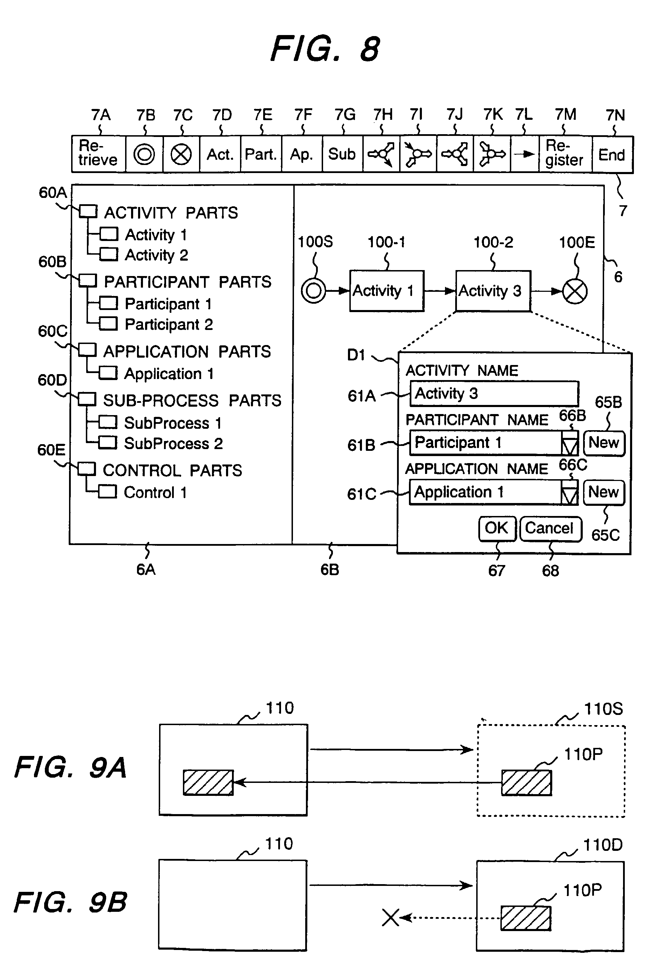

Referring to Fig. 8, the business process definition tool created on the display screen of the client terminal 5 in the invention will now be described.

When the user of the client terminal instructs the start of the business process definition by, for example, selecting one of icons displayed on the display screen, a window 6 for business process definition tool and a command menu 7 are formed on the display screen by using a multi-window control function of the client terminal.

The window 6 is divided into two right and left display regions (panes) 6A and 6B. In the left pane 6A, names of components stored in the repository file 10 are displayed in a tree form.

In correspondence with the activity table 11, participant table 12, application table 13, sub-process table 15, and control node table 14 in the repository file 10 described in Fig. 7, the component tree displayed in the left pane 6A is made up of five kinds of sub-trees 60A to 60E of registration entry names of the respective tables.

The right pane 6B is a region used for changing the definition of an existing component and creating new business process and components by selectively using the command menu 7 and the components displayed in the left pane. The command menu 7 is comprised of a plurality of icons (menu buttons) selected by the mouse operation. As menu buttons for component creation, a button 7B for creating the start node 100S, a button 7C for creating the end node 100E, a button 7D for creating the dialogue D1 for defining the activity, a button 7E for creating the dialogue D2 for defining the participant, a button 7F for creating the dialogue D3 for defining the application, a button 7G for creating the dialogue D4 for defining the sub-process, buttons 7H to 7K for creating the control nodes 14-1 to 14-4 shown in Fig. 4, and a button 7L for creating an arrow are prepared.

Other prepared menu buttons are a button 7A for instructing retrieval of an existing registered business process to which a specific component selected in the left pane 6A is related, a button 7M for instructing registration of the business process created in the right pane 6B, and a button 7N for instructing the closing of the business process definition tool window 6.

For example, after selecting the menu button 7B, when the user moves the cursor to a proper position in the right pane 6B and clicks the mouse, a symbol indicative of the start node 100S is displayed. When the user selects the menu button 7C and performs similar operations, a symbol indicative of the end node 100E is displayed. For instance, when the user selects "Activity1" from the activity name sub-tree 60A displayed in the left pane 6A, drags it, and drops it in a desired position in the right pane, the node symbol 100-1 indicative of Activity1 is displayed.

A new node which is not existing in the sub-tree 60A, for example, the node 100-2 having the activity name "Activity3" is desired to be created, user selects the menu button 7D and clicks the mouse in a desired cursor position in the right pane. By the operation, the activity definition dialogue D1 is created in the right pane 6B.

Although the symbol of the node 100-2 is labeled as "Activity3" and the dialogue D1 is displayed in a position apart from the symbol for convenience of explanation in Fig. 8, the label "Activity3" has not been determined yet at the time when the mouse operation is performed and the activity definition dialogue D1 is created in a position covering the node 100-2.

The activity definition dialogue D1 includes an input frame 61A of the activity name, an input frame 61B of the participant name, an input frame 61C of the application name, an OK button 67 for instructing the registration of the activity defined in the input frames into the repository file 10, and a cancel button 68 for closing (erasing) the activity definition dialogue D1.

The input frames 61B and 61C are accompanied by buttons 65B and 65C to be pressed when the name data (participant name and application name) is entered from the keyboard and scroll buttons 66B and 66C to be operated when existing names are selected from combo boxes, respectively. At the time point when the activity definition dialogue D1 is created by selecting the menu button 7D, the input frames 61A to 61C are blank. When the user selects the OK button 67 after setting activity names and attribute data (participant name and application name) in the input frames 61A to 61C, a new entry 110-3 is registered in the activity table 11 in the repository file 10 and the activity name "Activity3" is additionally displayed in the sub-tree 60A in the left pane 6A. When the user selects the cancel button 68, the dialogue D1 is disappeared and the node symbol 100-2 of the label "Activity3" appears.

At the time point when all of node elements necessary for a business process are arranged in the right pane 6B, the user couples the nodes sequentially with paths as shown by arrows in Fig. 8. Each of the paths is drawn by selecting the menu button 7L and dragging the cursor between two node symbols.

Although the activity definition dialogue D1 is created by selecting the menu button 7D and the new activity having the activity name "Activity3" is defined in the above case, a new activity may be created by changing a part of definition data on an existing activity.

For example, in Fig. 8, when the symbol 100-1 is double-clicked, the definition data on Activityl is read from the repository file 10, and the activity definition dialogue D1 indicative of the present definition of Activity1 is created. By correcting display data in the input frames 61A to 61C, the definition of Activity1 can be changed. One of the existing activities is copied from the left pane 6A to the right pane 6B, the symbol of the copied activity is double-clicked to thereby create the activity definition dialogue D1, at least one of the participant name 61B and the applicant name 61C is corrected, the activity name 61A is changed to a new activity name, and then the OK button 67 is pressed, thereby enabling a new activity to be added to the repository file 10.

In case of erasing a specific node in the business process created in the right pane 6B, a function key for deletion in the keyboard is used.

At the occasion of copying a component displayed in the left pane 6A into the right pane 6B in order to re-use the existing component stored in the repository file 10, one of the following two copying methods is properly used.

Fig. 9A shows the relation between an original entry 110 and a copy entry 110S when a component displayed in the left pane 6A is copied into the right pane 6B by an ordinary drug & drop operation (hereinbelow, called a "shallow copy"). When the existing component is shallow-copied, only the original entry 110 exists as an actual entry and a data changing operation 100P performed on the copied entry 110S on the display screen is reflected as it is in the original entry.

Fig. 9B illustrates, for example, the relation between the original entry 110 and the a copy entry 110D when a component displayed in the left pane 6A is dragged and dropped in a state where the control (Ctrl) key on the keyboard is pressed (hereinbelow, called a "deep copy"). When an existing component is deep-copied, independently of the original entry, a new copy entry 110D having the same data as the existing component is created. In this case, the data change operation 110P performed on the copy entry 110D is not reflected in the original entry 110.

When the definition of the original entry is desired to be changed, the target component is shallow-copied, the entry name is unchanged, and the OK button 67 is pressed. On the other hand, in case of creating a new entry by using the data on the original entry while keeping it, the target component is deep-copied, the definition is changed, a new component name is given, and then the OK button is pressed.

When a component in the left pane 6A is deep-copied into the right pane 6B, it can be determined that the user intends to change the definition of the copied component. A dialogue for definition may be therefore automatically created simultaneously with the completion of the drag & drop operation without a double-click operation of the symbol so that the user can immediately move to the definition changing operation.

Figs. 10A and 10B illustrate formats of the participant definition dialogue D2 and the application definition dialogue D3 created by selecting the menu buttons 7E and 7F, respectively.

In the participant definition dialogue D2, an input frame 62A of participant name and an input frame 62B of the decision rule of the participant are prepared. In the application definition dialogue D3, an input frame 63A of the application name and an input frame 63B of the execution program name are prepared. Each of the dialogues is provided with the OK button 67 and the cancel button 68 in a manner similar to the activity definition dialogue D1.

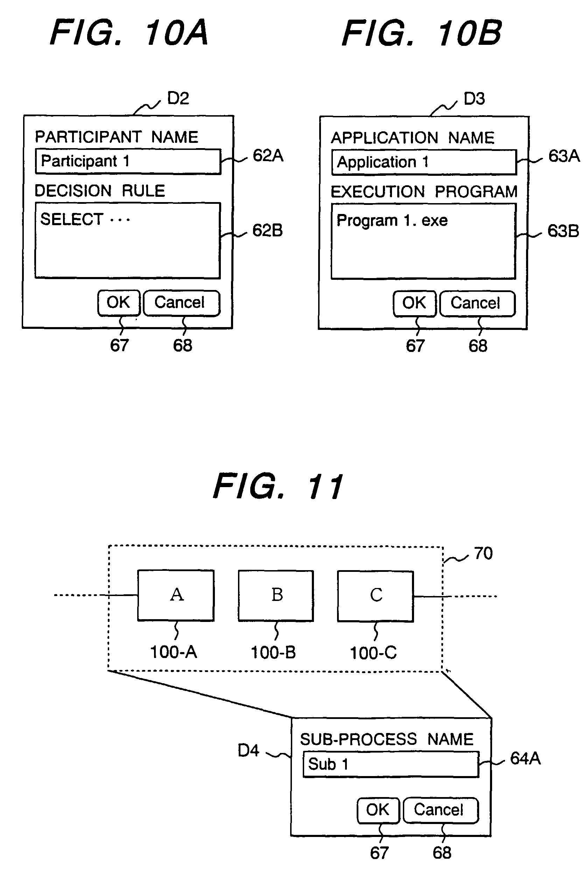

Fig. 11 shows a format of the sub-process definition dialogue D4 and its creating method. The sub-process definition dialogue D4 is created when the user selects the menu button 7G and a plurality of nodes such as the nodes 100-A to 100-C desired to be grouped as a sub-process in the business process shown in the right pane 6B are surrounded by a frame 70. In the sub-process definition dialogue D4, an input frame 64A of the sub-process name, the OK button 67, and the cancel button 68 are prepared.

In a manner similar to the activity definition dialogue D1, each of the above-mentioned definition dialogues D2, D3, and D4 can be also created by deep-copying a component from the left pane 6A to the right pane 6B or double-clicking a component displayed in the right pane 6B.

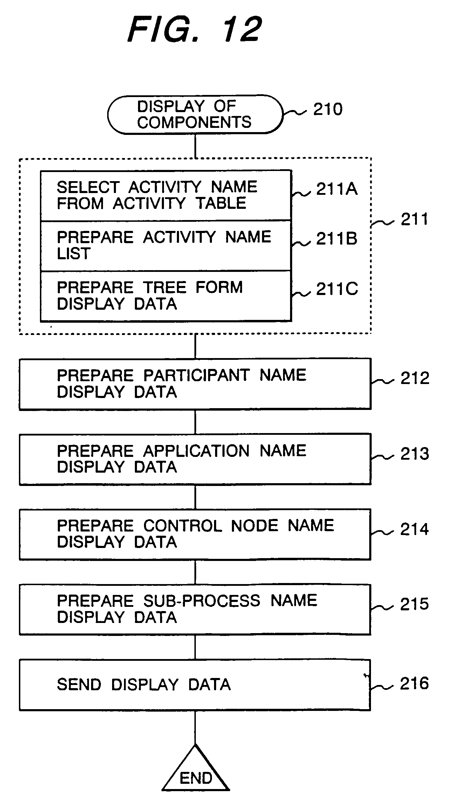

Fig. 12 shows the flowchart of a component display routine 210 prepared as the reference routine 21 in the program memory 20 for repository management.

The routine is executed in response to a display data transfer request issued from the repository access routine 51 when the business process definition tool window 6 is created on the client terminal 5-1 shown in Fig. 1.

The component display routine 210 comprises execution steps 211 to 215 of five sub-routines for creating a sub-tree corresponding to the component tables (activity table 11, participant table 12, application table 13, control node table 14, and sub-process table 15) formed in the repository file 10 and a step 216 for transferring display data formed by the sub-routines to the client terminal 5-1.

In step 211, the sub-routine of creating display data 60A in a tree form by referring to the activity table 11 is executed. According to the sub-routine, for example, a SELECT statement of SQL is executed, the activity name in the activity table 11 is retrieved (step 211A), the retrieved activity name is converted into a list format (step 211B), and the activity name in the list format is converted into display data in the tree form (step 211C).

Although a retrieved data name and a component table which is referred to are different, each of the sub-routines executed in steps 212 to 215 comprises sub-steps similar to those of the sub-routine executed in step 211. In each of the sub-routine, the participant name, application name, control node name, and sub-process name are retrieved and converted into the display data 60B to 60E in the tree form.

The display data is transferred to the client terminal in step 216 and displayed in the left pane 6A of the window 6 via the display control routine 53. When all of component names cannot be simultaneously displayed in the pane 6A since the component tree is too long, a part of the tree is displayed and the rest is seen by the scroll function.

As the retrieval routine 23, besides the component display routine 210, there is a component data retrieval routine executed in response to an operation of creating the dialogues D1 to D4 for component definition in the right pane 6B by the user. The routine is executed to simply read an entry having the entry name (111, 121, 131, or 151) which coincides with the component name designated by the user from the repository file 10 and transfer the data on the entry (data set) to the client terminal. The description of the flowchart by using a drawing is omitted.

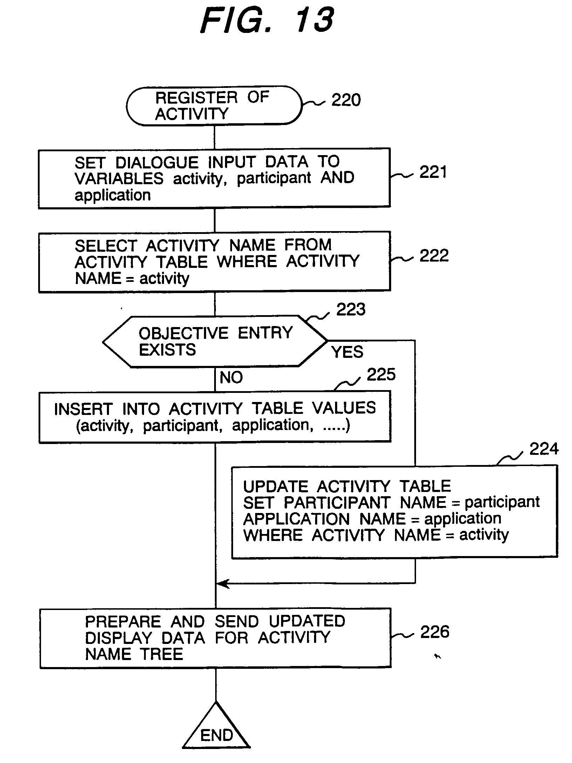

Figs. 13 to 16 show flowcharts of registering routines of respective components prepared as the registering routines 22 in the program memory 20 for repository management.

Fig. 13 shows an activity registering routine 220.

The activity registering routine 220 is executed, when the user selects the OK button 67 in the activity definition dialogue D1 shown in Fig. 8, the repository access routine 51 designates the kind of the accessed dialogue (in this case, "activity"), and issues a request of registering an entry to the registering routine 22.

In the activity registering routine 220, input data in the input frames 61A to 61C in the activity definition dialogue Dl is set to variables "activity", "participant", and "application", respectively, (step 221) and an entry having the same activity name 111 as the variable "activity" is retrieved from the activity table 11 (step 222).

The result of retrieval is determined (step 223). When the objective entry has already been registered in the activity table 11, the participant name 112 and the application name 113 of the retrieved objective entry are updated to the data shown by the variables "participant" and "application", respectively (step 224). When the objective entry does not exist in the activity table 11, a new entry in which the data on the variables "activity", "participant", and "application" are set as the activity name 111, participant name 112, and application name 113 is added to the activity table 11 (step 225). After that, display data in the sub-tree 60A of the updated activity name is created and sent to the client terminal (step 226). The display data is obtained by executing a sub-routine similar to that in step 211 in Fig. 12.

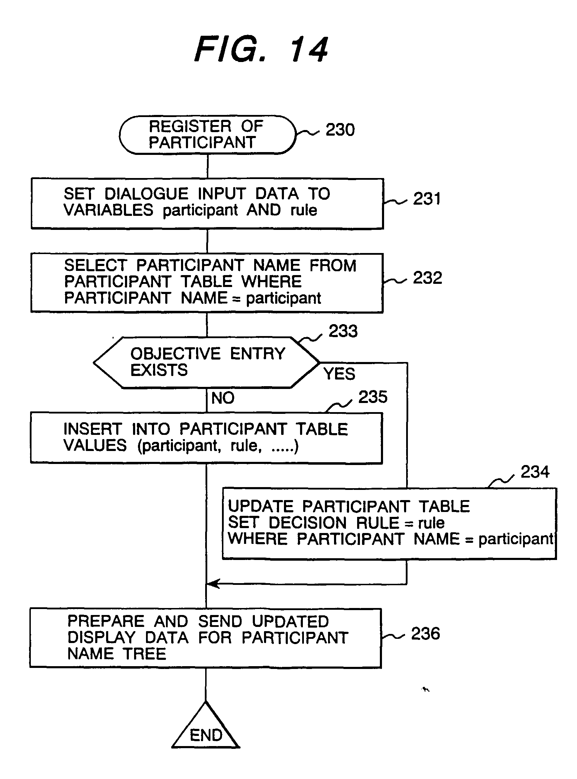

Fig. 14 shows the participant registering routine 230.

The participant registering routine 230 is executed in response to a registration request issued from the repository access routine 51 when the user selects the OK button 67 in the participant definition dialogue D2 shown in Fig. 10.

In the participant registering routine 230, input data in the input frames 62A and 62B in the participant definition dialogue D2 is set to variables "participant" and "rule", respectively (step 231) and an entry having the same participant name 121 as the variable "participant" is retrieved from the participant table 12 (step 232).

In a manner similar to the case of the activity registering routine 220, the retrieved result is determined (step 233). When the objective entry has already been registered in the participant table 12, the decision rule 122 of the retrieved objective entry is updated to the data shown by the variable "rule" (step 234). When the objective entry does not exist in the participant table 12, a new entry in which the data on the variables "participant" and "rule" are set as the participant name 121 and the rule 122 is added to the participant table 12 (step 235) and, after that, display data on the updated participant name sub-tree 60B is created and sent to the client terminal (step 236). The display data is obtained by executing a sub-routine similar to that in step 212 in Fig. 12.

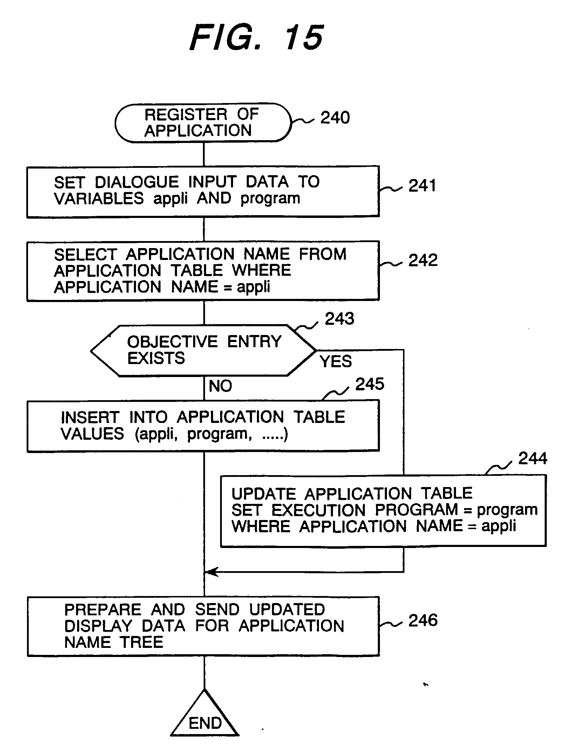

Fig. 15 shows the application registering routine 240.

The application registering routine 240 is executed in response to a registration request issued from the repository access routine 51 when the user selects the OK button in the application definition dialogue D3 shown in Fig. 10.

In the application registering routine 240, the input data in the input frames 63A and 63B of the application definition dialogue D3 are set as variables "appli" and "program" (step 241) and an entry having the application name 131 which is the same as the variable "appli" is retrieved from the application table 13 (step 242).

In a manner similar to the case of the activity registering routine 220, the retrieval result is determined (step 243). When the objective entry has already been registered in the application table 13, an execution program name 132 of the retrieved objective entry is updated to the data shown by the variable "program" (step 244). When the objective entry does not exist in the application table 13, a new entry in which the data on the variables "appli" and "program" are set as the application name 131 and the execution program name 132 is added to the application table 13 (step 245) and, after that, display data on the updated application name sub-tree 60C is created and sent to the client terminal (step 246). The display data is obtained by executing a sub-routine similar to that in step 213 in Fig. 12.

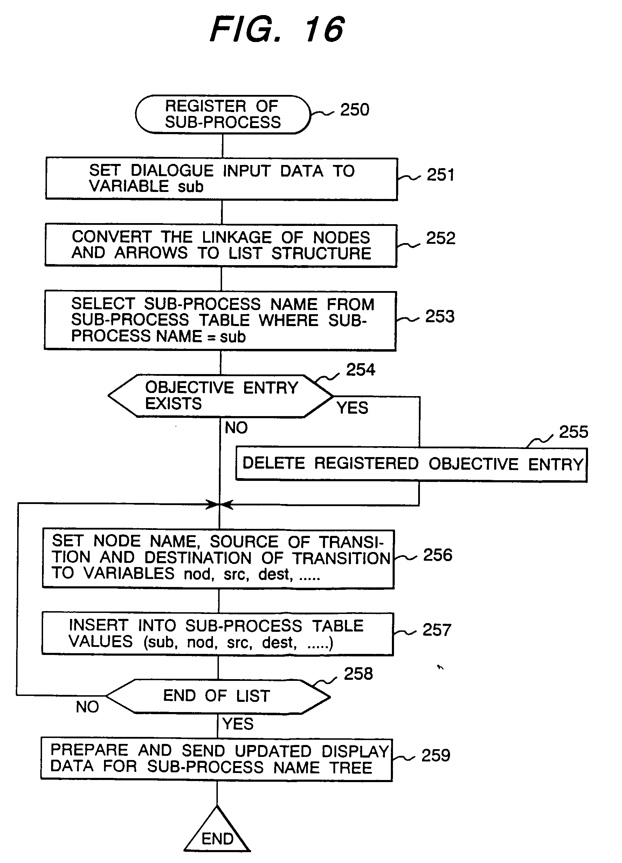

Fig. 16 shows a sub-process registering routine 250.

The sub-process registering routine 250 is executed in response to a registration request issued from the repository access routine 51 when the user selects the OK button 67 in the sub-process definition dialogue D4 shown in Fig. 11.

In the sub-process registering routine 250, the input data on the input frame 64A in the sub-process definition dialogue D4 is set to a variable "sub" (step 251). After that, by following the linkage of nodes and arrows included in the sub-process, the data is converted into a list structure indicating the connecting relation of nodes (step 252). For example, as shown in Fig. 11, when the sub-process is made up of three activity nodes A, B, and C which are arranged in series, list structure data indicative of the connecting relation of the nodes A, B, and C is created.

Subsequently, an entry having the same sub-process name 151 as the variable "sub" is retrieved from the sub-process table 15 (step 253).

The result of retrieval is detrermined(step 254). If the objective entry has already been registered in the sub-process table 15, the registered entry having the same sub-process name 151 as the variable "sub" is deleted from the sub-process table 15 (step 255). After that, on the basis of the list structure data created in step 252, the source of transition and the destination of transition are specified node by node. The node name is set to a variable "nod" and the specified source and destination of transition are set to variables "src" and "dest", respectively (step 256), and a new entry in which the variables "sub", "nod", "src", and "dest" are set to the sub-process name 151, activity name 152, source of transition 153, and destination of transition 154 is additionally registered into the sub-process table 15 (step 257).

The above-mentioned creation and registration of a new entry are repeated node by node at all nodes included in the list structure data. When registration of the entries of all nodes is finished (step 258), display data on the updated sub-process name sub-tree 60D is formed and sent to the client terminal (step 259).

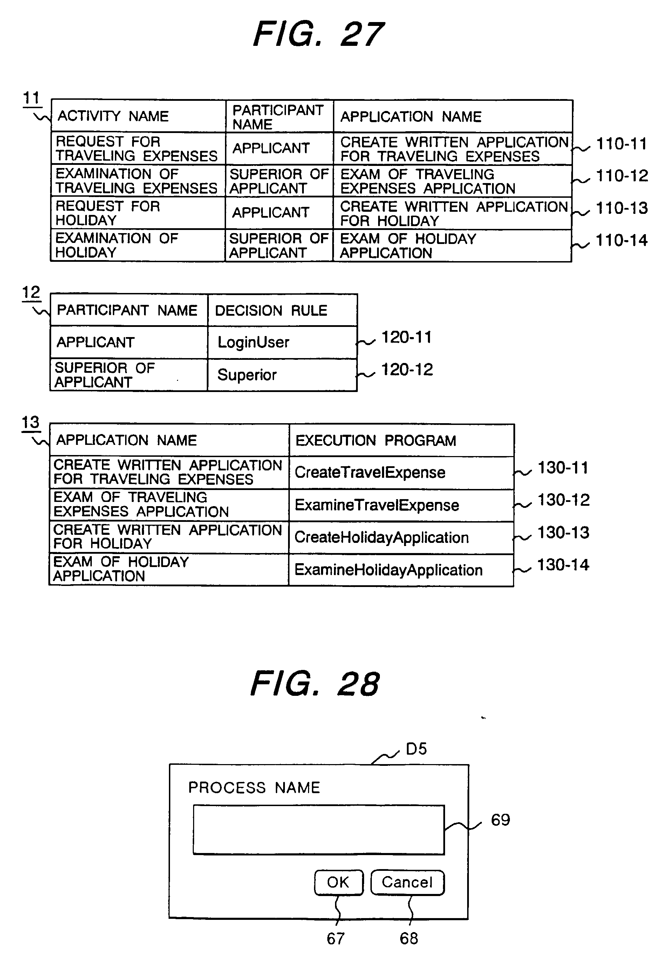

In the registering routine 23, besides the registering routines of respective components, a business process registering routine executed in response to a registration request issued from the repository access routine 51 when the user selects the OK button 67 in a process name definition dialogue D5 which will be described hereinlater in Fig. 28 is included. The routine is executed to add definition data on a business process consisting of a plurality of nodes defined in the right pane 6B to the business process definition table 31 in the database 30. Since the routine has a procedure basically similar to that of the sub-process registering routine in Fig. 16 only differing in the name of variable, the name of table, and entry format to be used, specific description of the flowchart is omitted here.

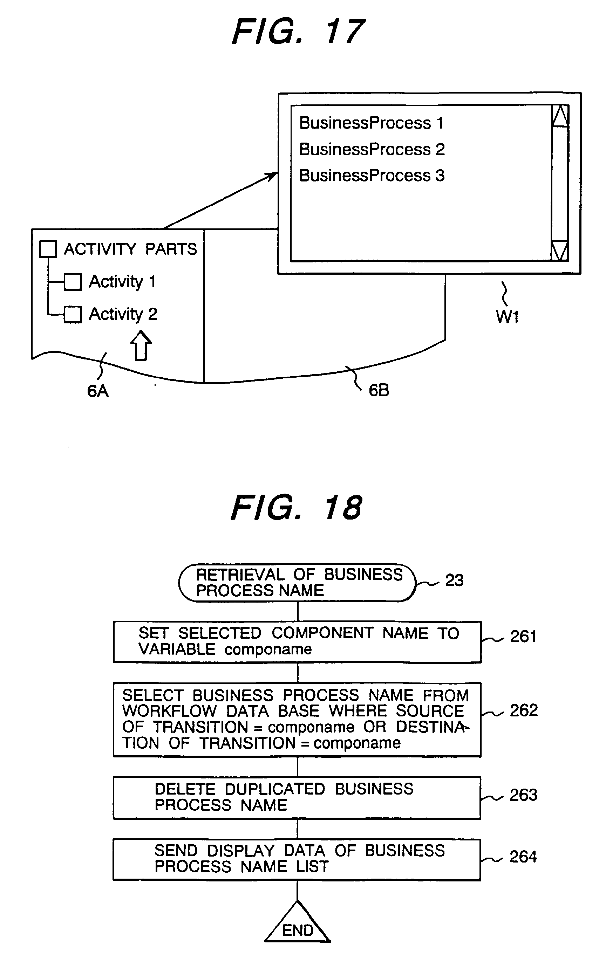

Fig. 17 shows the user operation in the case of specifying one of components managed in the repository file 10 and retrieving the definition of a business process in which the component is used.

After pressing the menu button 7A for retrieval, the user selects one of component names in a component tree displayed in the left pane 6A. By the user operation, the retrieving routine 23 is executed and the result of the retrieval is displayed on a window W1.

Fig. 18 shows a flowchart of the retrieving routine 23 for retrieving a business process name.

In the retrieving routine 23, the component name selected by the user is set to a variable "componame" (step 261) and an entry having the same node name as the variable "componame" in the source 302 of transition or the destination 303 of transition is retrieved from the business process definition table 31 in the workflow database 30 (step 262). As obviously understood from the cases of the entries 300-1 and 300-2 or 300-2 and 300-3 having the business process name BP1 shown in Fig. 6, a plurality of entries having the same business process name are redundantly included in the retrieval result. After deleting the entries of the same business process name (step 263), a display list of the business process names is sent to the client terminal (step 264).

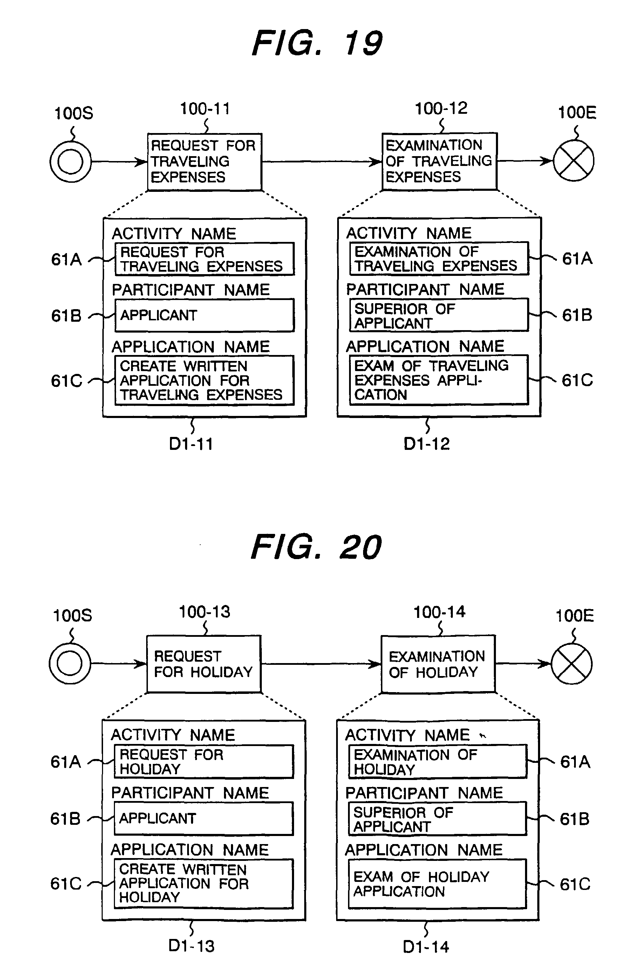

Referring to Figs. 19 to 27, a specific example of the business process definition according to the invention executed by using an existing component on the tool screen (user interface) will be described hereinbelow.

As shown in Fig. 19, a change in the definition tool screen 6 and the repository file 10 in association with the user operation will be described by taking the case of newly defining a holiday application business process shown in Fig. 20 under the condition that a traveling expenses application business process definition comprised of an activity 100-11 of traveling expense request and an activity 100-12 of traveling expense examination already exists in the business process definition table 31 and the definition data on the two activities 100-11 and 100-12 are stored in the repository file 10.

In the traveling expenses application business process shown in Fig. 19, the traveling expenses application activity 100-11 denotes a business process of "creating a written request or application for traveling expenses in such a manner that an applicant of traveling expenses defined by a participant name 61B activates traveling expenses written application creating program defined by an application name 61C and enters data into each of input items of the written application for traveling expenses displayed on the screen of the client terminal 5-J". A work item (written application for traveling expenses in an electronic document form) created by the traveling expenses request or application activity 100-11 is transferred from the client terminal 5-J to the workflow server 1 and stored in the workflow database 30. At this time, the work item stored in the workflow database 30 is linked to the traveling expenses examination activity 100-12 as the next node of the business process by the business process management routine 41.

The traveling expenses examination activity 100-12 denotes a business process of "examining each work item (written application for traveling expenses) on the screen of the client terminal 5-K by activating the traveling expenses application examining program defined by the application name 61C by the superior of the traveling expenses applicant defined by the participant name 61B". The traveling expenses application examining program is a program by which written application for the traveling expenses created by the applicant is read from the workflow database 30 to the screen of the terminal and the decision result of approval or rejection can be entered.

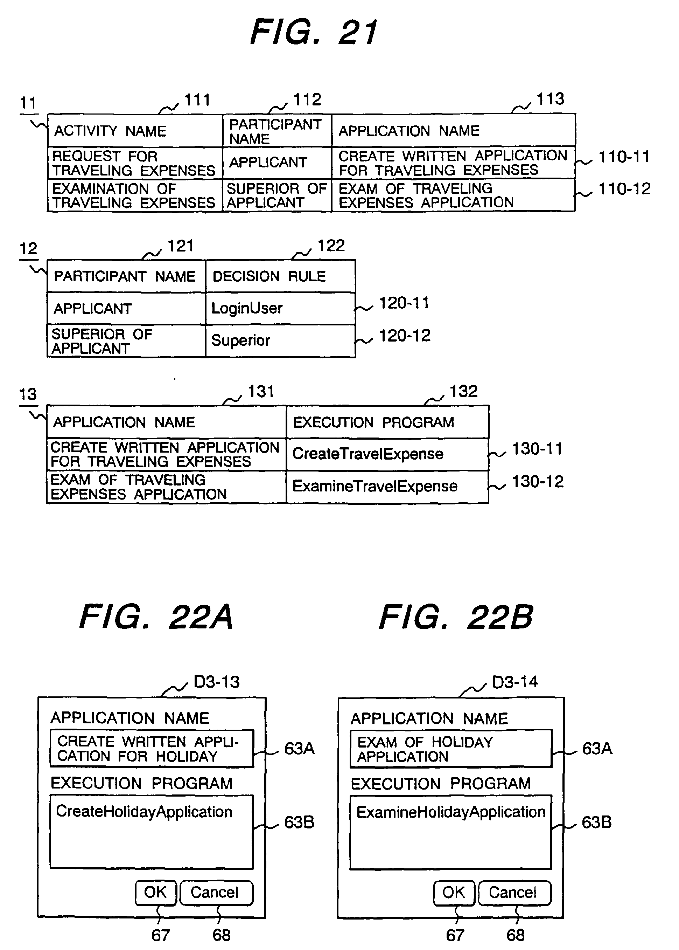

Fig. 21 illustrates the state of the repository file 10 at the time point when a process for defining a holiday application business process is started.

In the activity table 11 in the repository file, the two entries 110-11 of "traveling expenses request" and 110-12 of "traveling expenses examination" are registered in the activity name 111. In the participant table 12, two entries 120-11 and 120-12 of "applicant" and "superior of the applicant" are registered in the participant name 121. "LoginUser" set in a decision rule 122 of the entry 120-11 for applicant shows the name of an executable program or distributed object for regarding the user ID of the client terminal which logs in the workflow system as an applicant. "Superior" in the entry 120-12 for applicant's superior, which is set in the decision rule 122 denotes the name of an executable program or distributed object for specifying the applicant's superior by retrieving the table on the basis of the applicant (user ID) of each work item.

In the application table 13, two entries of "create written application for traveling expenses" 130-11 and "examination of travelling expenses application" 130-12 are registered in application name 132. In the entries, "CreateTravelExpense" and "ExamineTravelExpense" are set as execution programs 132. "CreateTravelExpense" is the name of an executable program or distributed object for displaying the written application for the travelling expenses on the screen and allowing data to be entered into necessary items. "ExamineTravelExpense" denotes the name of an executable program or distributed object for displaying the written application for the travelling expenses into which data has been inputted on the screen and allowing approval or rejection to be selected.

The holiday request business process to be newly created is comprised of, as shown in Fig. 20, a holiday request activity 100-13 and a holiday examination activity 100-14. Since the participant name of the holiday request activity 100-13 is "applicant" and the participant name of the holiday examination activity 100-14 is "superior of the applicant", the nodes have the common points with the traveling expenses application activity 100-11 and the traveling expenses examination activity 100-12 for defining the traveling expenses application business process.

At the occasion of creating the holiday request business process, the user of the client terminal 5-J first creates an application program for holiday request and for holiday request examination. The programs may be executable programs or distributed objects developed in an arbitrary programming language.

The user registers the program for holiday request into the repository file 10. The registration of the program can be achieved by creating a dialogue D3-13 for application definition in the right pane 6B by selecting the menu button 7F in the business process definition tool window 6 shown in Fig. 8 and, for example, entering the definition data to the input frames 63A and 63B as illustrated in Fig. 22A.

In this case, the application names "create written application for holiday" and the execution program name "CreateHolidayApplication" are inputted into the input frames 63A and 63B, respectively, and after that, the OK button 67 is clicked.

Similarly, a dialogue D3-14 for application definition to register the program of the holiday application examination is created. As shown in Fig. 22B, after entering the application name "exam of holiday application" and the execution program name "ExamineHolidayApplication" into the input frames 63A and 63B, respectively, the OK button 67 is clicked.

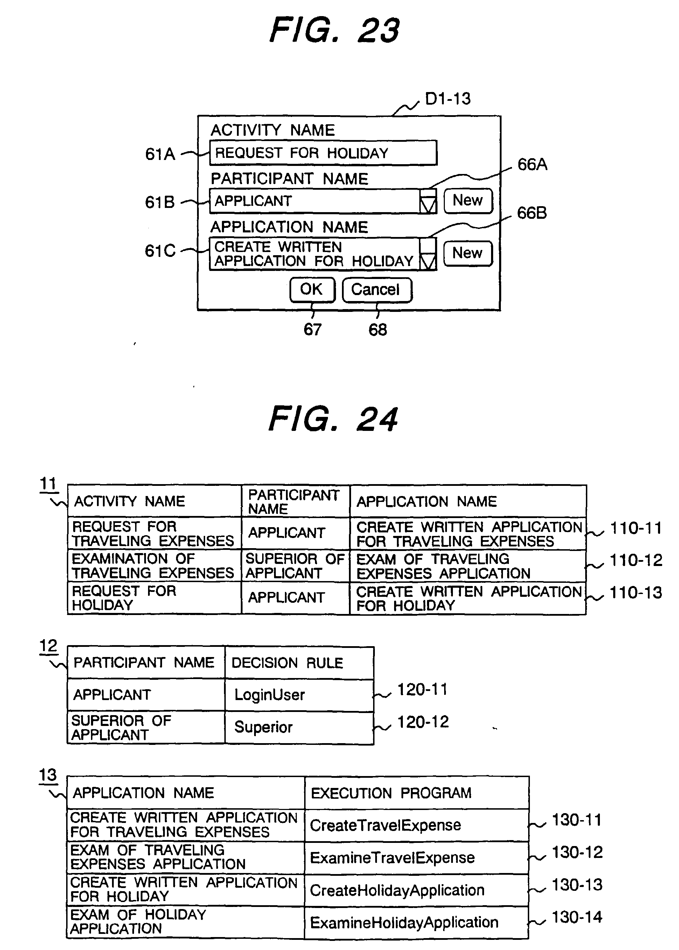

By the user operations, as illustrated in Fig. 24, two entries 130-13 and 130-14 of application names of "create written application for holiday" and "exam of holiday application" are additionally registered into the application table 13 in the repository file 10.

The holiday request activity 100-13 will now be newly added.

By selecting the menu button 7D, the user creates the activity definition dialogue D1-13 shown in Fig. 23 and enters "request for holiday" into the activity name 61A. Since the participant name "applicant" and the application name "create written application for holiday" which are desired to be defined by the holiday request activity 100-13 have been already registered in the repository file 10, it is sufficient to select the objective participant name and application name from the combo box by operating scroll keys 66A and 66B instead of entering characters from the keyboard.

After setting the definition data, the user clicks the OK button 67 in the activity definition dialogue D1-13, thereby adding the new entry 110-13 for holiday request into the activity table 11 in the repository file 10 as shown in Fig. 24.

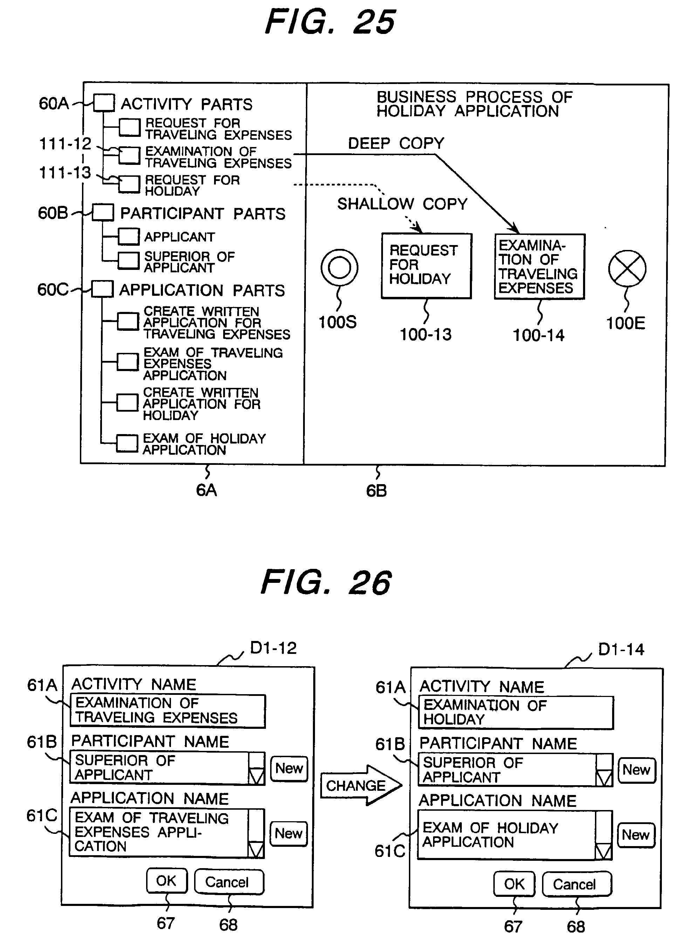

Fig. 25 shows the user operation executed on the window 6 in order to create a holiday application business process.

In the left pane 6A of the business process definition tool window, a component tree corresponding to the contents of the repository file 10 illustrated in Fig. 24 is displayed. The user selects the menu buttons 7B and 7C to thereby create the start node 100S and the end node 100E in the right pane 6B, shallow-copies the holiday request 111-13 from an activity name sub-tree 60A in the left pane 6A to the right pane 6B and deep-copies the traveling expenses examination 111-12 to the right pane 6B.

Since the activity definition dialogue D1-12 including the traveling expenses examination definition data shown in Fig. 26 is created in the right pane 6B when the traveling expenses examination activity is deep-copied, as shown in an updated activity definition dialogue D1-14, the data in the activity name 61A and the application name 61B is updated to "examination of holiday" and "exam of holiday application", respectively, while unchanging the participant name "superior of applicant". After that, the user clicks the OK button.

By click of the OK button, as shown in Fig. 27, the activity entry 110-14 for holiday examination is added into the activity table 11 in the repository file 10.

At the time point when the activity definition dialogue D1-14 is closed, the node 100-12 shown in Fig. 25 is changed to the symbol 100-14 labeled with the activity name of "examination of holiday". When the node symbol 100-14 is double-clicked, the definition can be referred to in the dialogue D1-14. In such a state, therefore, by coupling the nodes with arrows while selecting the menu button 7L, the holiday application business process shown in Fig. 20 can be completed.

When it is desired to register the holiday application business process of Fig. 20 defined in the left pane 6B into the workflow database 30, the user clicks the menu button 7M for registration. In response to the click of the menu button 7M, as shown in Fig. 28, the process name definition dialogue D5 having the input frame 69 of the process name is created on the terminal's screen.

When the user clicks the OK button 67 after entering a new business process name such as "holiday" into the input frame 69, the business process registering routine in the registering routine 22 is activated and the definition data on the holiday application business process is registered into the business process management table 31. In this case, each of the definition data on the holiday application business process has the name of "holiday" as the business process name 301 and is divided into three entries having, as the sources 302 of transition and the destinations 303 of transition, the start node and the holiday application activity, the holiday application activity and the holiday examination activity, and the holiday examination activity and the end node, respectively.

As obviously understood from the description of the foregoing embodiment, according to the invention, the definition data on components included in the business process definition which has already been registered in the workflow system is stored in the component file (repository file). At the occasion of defining a new business process, the existing components are combined, and as necessary, the existing components are partially changed or a new component is added. Thus, a desired business process definition can be completed in short time.

As shown in the embodiment, by adopting the method such that the list of existing components is displayed on the tool window for business process definition created on the display screen of the client's terminal, a desired component is copied by the user to thereby create the component in a work region, and the contents of the definition of each component are displayed through the dialogue for definition corresponding to the component, the contents of the existing component can be confirmed and updated promptly. Components necessary for a new business process definition can be therefore securely prepared with a simple operation.

## Claims

1. A workflow server connected to a plurality of client terminals, comprising:
filing means for storing a data set as components of each business process defined for each business; and
component managing means for providing a list of component names of each data set stored in the filing means as business process definition tool information to one of the client terminals, reading a corresponding data set including a specific component designated by the client terminal from the filing means, and transmitting the read data set to the client terminal.

2. A workflow server according to claim 1, wherein the filing means has a plurality of tables for storing the data set by the kind of component, and
the component managing means classifies the lists of the component names into tables and provides the resultant to the client terminal.

3. A workflow server according to claim 1, wherein the component managing means has means for additionally registering a data set having a new component name created by the client terminal into the filing means.

4. A workflow server according to claim 2, wherein the component managing means has means for additionally registering a data set having a new component name created by the client terminal into the filing means.

5. A workflow server connected to a plurality of client terminals, for making a work item created or processed by each of the client terminals transit in accordance with a business process which is preliminarily defined for each business, comprising:
first storing means for storing definition data on a business process made up of a plurality of nodes;
second storing means for storing a data set in which a component of the business process stored in the first storing means is defined;
workflow managing means for making a work item created or processed by each client terminal transit in accordance with the business process definition data corresponding to the work item stored in the first storing means; and
component managing means for providing a list of component names of each data set stored in the second storing means in response to a request from the client terminal, and transmitting a data set corresponding to a component name to the client terminal in response to a data transfer request in which the component name is designated from the client terminal.

6. A workflow server according to claim 5, wherein definition data on each business process stored in the first storing means defines the connecting relation of nodes constructing each business process,
at least a part of the data set stored in the second storing means has a component name corresponding to a node name used in the business process definition data, and wherein
the workflow managing means controls each of the work items on the basis of the business process definition data stored in the first storing means and the data set stored in the second storing means which is linked from the node name in the business process definition data.

7. A workflow server according to claim 5, wherein the component managing means includes means for additionally registering business process definition data having a new process name created by the client terminal into the first storing means.

8. A workflow server according to claim 6, wherein the component managing means includes means for additionally registering business process definition data having a new process name created by the client terminal into the first storing means.

9. A workflow server according to claim 5, wherein the component managing means has means for additionally registering a data set having a new component name created by the client terminal into the second storing means.

10. A workflow server according to claim 6, wherein the component managing means has means for additionally registering a data set having a new component name created by the client terminal into the second storing means.

11. A workflow server according to claim 5, further comprising retrieving means for retrieving a business process having a specific component from business processes stored in the first storing means when a request for retrieving the specific component from business processes is received from the client terminal, and replying the name of the relevant business process to the client terminal.

12. A client terminal connected to a workflow server which makes a work item transit in accordance with a business process preliminarily defined for each business, comprising:
a display screen;
input means for operating a cursor position on the display screen; and
control means for creating a window for business process definition and a command menu on the display screen, communicating with the workflow server and changing a display on the window in accordance with a user operation, the command menu having a plurality of buttons according to kinds of components of a business process, and the window having a first region for displaying a list of component names of a business process and a second region used to define a new business process or a new component, wherein
the control means is provided with:
a function of displaying a registered list of the names of components of a business process from the workflow server, in the first region at the time of creating the window;
a function of creating a symbol of a component corresponding to a selected button or a dialogue for definition corresponding to the component in response to a user operation of selecting a button in the command menu, in the second region; and
a function of selecting a specific component from the list of component names displayed in the first region and creating a symbol indicative of the specific component or a dialogue for definition corresponding to the specific component in the second region in response to a user operation of copying the specific component into the second region.

13. A client terminal according to claim 9, wherein the control means includes a function of making a request to register component definition data entered by the user in the dialogue for definition into the workflow server.

14. A client terminal according to claim 12, wherein the command menu has a button for creating a dialogue for defining a business process name, and
the control means has a function of creating the dialogue for defining a business process name in the second region in response to a user operation of selecting the button and making a request to register definition data on a new business process defined in the second region under a process name entered in the dialogue into the workflow server.

15. A client terminal according to claim 13, wherein the command menu has a button for creating a dialogue for defining a business process name, and
the control means has a function of creating a dialogue for defining a business process name in the second region in response to a user operation of selecting the button and making a request to register definition data on a new business process defined in the second region under a process name entered in the dialogue into the workflow server.

16. A client terminal according to claim 12, wherein each of the dialogues for definition has an icon for instructing registration of definition data, and
the control means requests to register a data set defined in the dialogue for definition into the workflow server in response to the user's selection of the icon.

17. A client terminal according to claim 13, wherein each of the dialogues for definition has an icon for instructing registration of definition data, and
the control means requests to register a data set defined in the dialogue for definition into the workflow server in response to the user's selection of the icon.
